Europäisches Patentamt

**European Patent Office**

Office européen des brevets

(19)

(11) Numéro de publication: **0 229 557
B1**

## FASCICULE DE BREVET EUROPEEN

(12)

(45) Date de publication du fascicule du brevet:
**01.08.90**

(51) Int. Cl.⁵: **G02B 6/42**

(21) Numéro de dépôt: **86402699.2**

(22) Date de dépôt: **05.12.86**

(54) **Procédé de positionnement réciproque d'une fibre optique et d'un laser semiconducteur, et appareil de positionnement mettant en oeuvre ce procédé.**

(30) Priorité: **10.12.85 FR 8518256**

(43) Date de publication de la demande:
**22.07.87 Bulletin 87/30**

(45) Mention de la délivrance du brevet:
**01.08.90 Bulletin 90/31**

(84) Etats contractants désignés:
**DE GB IT NL SE**

(56) Documents cités:
**GB-A- 2 065 918**

**PATENTS ABSTRACTS OF JAPAN,
vol. 9, no. 93 (P-351)[1816], 23 avril 1985; &
JP-A-59 219 707 (FUJIKURA DENSEN K.K.) 11-12-1984
PATENTS ABSTRACTS OF JAPAN,
vol. 8, no. 165 (P-291)[1602], 31 Juillet 1984; &
JP-A-59 61 809 (FUJITSU K.K.) 09.04.1984
XEROX DISCLOSURE JOURNAL,
vol. 4, no. 3, Mai/Juin 1979, pages 387-388, Stamford,
Connecticut, US; M.D. BAILEY et al.: "Method and
apparatus to align and affix an optical fiber and laser or
led"**

(73) Titulaire: **THOMSON-CSF, 51, Esplanade du Général de
Gaulle, F-92800 Puteaux(FR)**

(72) Inventeur: **Georgeot, Michel, THOMSON-CSF
SCPI 19, avenue de Messine, F-75008 Paris(FR)**
Inventeur: **Chamfrault, Thierry, THOMSON-CSF
SCPI 19, avenue de Messine, F-75008 Paris(FR)**
Inventeur: **Dubroeucq, Georges, THOMSON-CSF
SCPI 19, avenue de Messine, F-75008 Paris(FR)**
Inventeur: **Martin, Frantz, THOMSON-CSF
SCPI 19, avenue de Messine, F-75008 Paris(FR)**

(74) Mandataire: **Taboureau, James et al, THOMSON-CSF
SCPI, F-92045 Paris La Défense Cédex 67(FR)**

## Description

La présente invention concerne un procédé de positionnement réciproque d'une fibre optique et d'un composant semiconducteur émetteur de rayonnement lumineux, en vue de réaliser un ensemble dit "tête optique", dans lequel la fibre optique et le composant opto-électronique sont couplés dans leur position optimale, et rendus solidaire d'un boitier qui les immobilise et les protège. L'invention concerne également l'appareil de réglage de positionnement de la fibre optique par rapport à la région émissive du composant opto-électronique, selon le procédé.

Les têtes optiques associant un composant opto-électronique et une fibre optique constituent un point important dans tous les systèmes de traitement d'informations et de transmission de données par fibres optiques. Les fibres optiques ne peuvent véhiculer des informations que si celles-ci sont émises par des composants qui, actuellement, sont des diodes électroluminescentes ou des lasers. Mais, en raison des très faibles dimensions des diodes ou des lasers, d'une part, et des fibres optiques d'autre part, d'un diamètre de coeur de 70 microns pour une fibre multimode et de 29 microns pour une fibre monomode, il convient de positionner la fibre avec une précision de l'ordre de 0,5 à 10 microns par rapport au faisceau lumineux émis, dans un plan perpendiculaire à ce faisceau.

Le positionnement d'une fibre optique est donc une opération délicate, qui de ce fait est longue et dont le prix vient grèver le développement des têtes optiques et par conséquent les transmissions de données par fibres optiques. C'est donc un objet de l'invention de proposer un procédé de positionnement relatif fibre optique-composant optoélectronique adapté à l'automatisation totale.

C'est un autre objet de l'invention de présenter un appareil qui met en oeuvre cette méthode de positionnement, et qui, alimenté en fibres optiques et en composants opto-électroniques, assure le positionnement réciproque, la fixation des pièces et délivre des têtes optiques couplées au maximum d'efficacité.

De façon à simplifier les explications et les figures, l'invention sera exposée en s'appuyant sur le cas d'une fibre optique et d'un laser montés dans un boitier de type DIL (Dual in Line), parce que ce boitier est courant, économique et qu'il permet, tant qu'il n'est pas fermé par un couvercle, de repérer la position du laser.

Le procédé consiste à d'abord repérer la position de la face émissive avant du laser, par rapport à un référentiel fixe. Pour cela, on utilise l'énergie spontanée rayonnée par la source laser dans une direction perpendiculaire à l'axe d'émission, comme signal de position par rapport à un détecteur différentiel, diode écartométrique ou diode à deux cadrans, sur lequel ladite énergie spontanée est focalisée par un système optique d'imagerie. Le détecteur différentiel matérialise le référentiel fixe.

La fibre optique est alors déplacée, entre le laser et le système optique d'imagerie, jusqu'à ce qu'elle "survole" le laser. Dans cette position où elle est trop avancée par rapport au laser, elle module la lumière émise par celui-ci à partir du moment où elle passe au-dessus du point d'émission du laser. La face émissive du laser et l'extrémité de la fibre optique sont alors repérées par rapport au référentiel fixe.

La fibre optique est reculée d'une quantité connue avec précision, de façon à créer une distance entre la face active du laser et l'extrémité de la fibre optique, et elle est rapprochée de l'axe d'émission du laser, dans un double mouvement de balayage vertical et horizontal. L'acquisition de l'information indiquant que la fibre optique transmet la lumière émise par le laser et la position de couplage optimum sont controlées par une diode réceptrice qui, placée à l'autre extrémité de la fibre optique, capte la lumière émise par le laser. Le couplage est optimum, dans un plan perpendiculaire à l'axe d'émission du laser, ou plan transversal, lorsque l'énergie détectée par la diode réceptrice est maximale.

Le couplage est optimisé par un déplacement longitudinal de la fibre optique le long de l'axe d'émission du laser, sans modifier sa position transversale.

Lorsque le couplage optimum est atteint, la fibre optique est collée sur la céramique qui supporte la puce du laser, et sa gaine est collée sur le boitier de la tête optique, au moyen d'un passage prévu à cet effet dans la paroi du boitier.

La tête optique réalisée est optimisée.

L'appareil de positionnement selon l'invention comporte les moyens qui permettent de mettre en oeuvre le procédé qui vient d'être décrit. Il comprend:

– des moyens formant référentiel fixe, lesdits moyens étant constitués par un dispositif d'imagerie optique et un détecteur optique différentiel, fixés sur un bâti rigide,

– des moyens mobiles de support et de maintien d'un boitier ouvert, dans lequel est fixé le laser,

– des moyens de déplacements rapide et lent du laser dans son boitier, selon l'axe émissif du laser pour positionner la face émissive du laser à l'origine du référentiel fixe,

– des moyens mobiles de support et de maintien d'une fibre optique,

– des moyens de déplacements rapide et lent de la fibre, selon l'axe émissif du laser, pour introduire la fibre dans le boitier et la positionner entre le laser et le détecteur différentiel,

– deux moyens de déplacements fins, par mouvement de va et vient, de la fibre dans un plan transversal par rapport à l'axe émissif du laser,

– des moyens de détection optique de la lumière émise par le laser et transmise par la fibre,

– des moyens mobiles d'immobilisation de la fibre par rapport au boitier du laser,

– des moyens électroniques d'acquisition des données de positions de la fibre et du laser et de commande des moyens de déplacements et de collage.

De façon plus précise l'invention concerne un procédé de positionnement réciproque de l'extrémité d'une fibre optique et d'un laser semiconducteur, la pastille du laser étant montée dans un boitier sans couvercle, et la fibre sensiblement parallèle à l'axe émissif du laser, étant introduite dans le boitier à travers l'une de ses parois, ce procédé étant caractérisé en ce que le laser et la fibre sont repérés par rapport à un référentiel fixe dont un axe est l'axe optique commun d'un dispositif optique d'imagerie et d'un détecteur optique différentiel qui capte l'énergie rayonnée par le laser dans une direction perpendiculaire à l'axe d'émission du laser.

L'invention sera mieux comprise par la description d'un exemple de réalisation de l'appareil et la description plus détaillée de la méthode de positionnement d'une fibre par rapport à un laser, ces descriptions s'appuyant sur les figures jointes en annexe, figures qui, toutes, concernent l'invention:

– figure 1: convention de repérage d'une fibre optique et d'un composant opto-électronique,
– figure 2: schéma de principe d'un appareil de positionnement,
– figure 3: vue simplifiée en plan des dispositifs supports de la fibre optique et du laser,
– figure 4: schéma de positionnement du laser par rapport à un référentiel fixe,
– figure 5: forme du signal électrique fourni par le détecteur différentiel au cours du déplacement du laser,
– figure 6: vue en coupe, partielle, du boitier de tête optique, montrant l'introduction de la fibre dans le boitier et sa manipulation par rapport au laser,
– figure 7: vue de trois quart dans l'espace de l'extrémité de la pipette de manipulation,
– figures 8 et 9: modulation du signal électrique sur le détecteur différentiel en fonction de la distance de la fibre optique de la face émissive du laser, lorsque la fibre survole le laser (figure 8) et lorsque la fibre est correctement éloignée de la face émissive (figure 9),
– figure 10: amplitude de modulation du signal électrique en fonction de la distance fibre optique/laser,
– figure 11: forme du signal électrique détecté par la diode réceptrice, en fonction de la position de la fibre optique dans un plan transversal par rapport à l'axe d'émission du laser.

Pour réaliser des têtes optiques fibrées, il faut positionner avec une précision de l'ordre du micron ou inférieure au micron une fibre optique par rapport à la face émissive d'un laser semiconducteur, et maintenir cette position durant la phase d'immobilisation de la fibre par collage ou par soudure. Ceci nécessite donc de repérer les positions respectives de la face émissive d'un laser semiconducteur et de l'extrémité d'une fibre optique qui doit lui être couplée, et par conséquent de disposer d'un référentiel fixe.

La base du procédé mis en oeuvre dans l'appareil objet de la présente invention consiste à utiliser l'énergie spontanée rayonnée par la source laser dans une direction perpendiculaire à l'axe d'émission, comme signal de position du laser par rapport à un référentiel fixe.

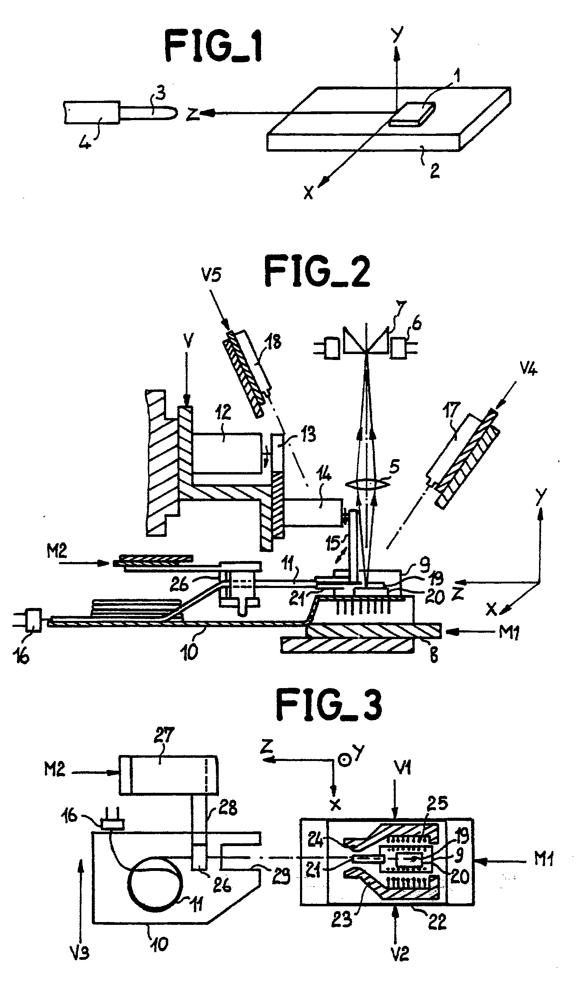

De façon à clarifier les expressions et les figures dans la suite de ce texte, la figure 1 représente la convention prise pour désigner les mouvements dans l'espace de la fibre optique et de la pastille de semiconducteur. La pastille de laser semiconducteur 1 étant fixée sur une embase céramique 2, elle-même fixée à l'intérieur d'un boitier qui n'est pas représenté sur cette figure, le laser 1 émet un rayonnement lumineux principal dans une direction qui par convention sera appelé l'axe en Z, sur lequel doit être aligné et positionnée l'extrémité 3 de la fibre optique, qui sort de la gaine 4. Pour la commodité du travail et de la réalisation d'une tête optique, cet axe en Z est dans un plan horizontal. Dans un plan vertical, passant par la face émissive de la pastille de laser, sont définis deux autres axes X à l'horizontale et Y à la verticale. L'ensemble des axes X, Y et Z déterminent donc un trièdre dans l'espace.

C'est en déplaçant la fibre optique d'abord le long de l'axe en Z, puis ensuite par un balayage en Y et en X que son extrémité est couplée dans une position optimale par rapport à la pastille de laser.

La figure 2 représente un schéma simplifié de l'appareil de positionnement réciproque d'une fibre optique par rapport à un laser, dont la description permettra de mieux comprendre le procédé de centrage du coeur de la fibre optique par rapport au faisceau émis par le laser.

L'appareil de positionnement comporte, fixé sur un bati rigide de façon à ce que les précisions des déplacements soient inférieures au micron, d'abord un référentiel fixe par rapport auquel seront positionnés le laser d'une part et l'extrémité de la fibre optique d'autre part. Ce référentiel est constitué par une optique d'imagerie 5, qui est un objectif de microscope dont l'agrandissement est de l'ordre de 20, choisi pour avoir une dynamique de recherche suiffisante, de l'ordre de 300 à 500 microns, sans que le faisceau émis par l'arrière du laser ne pénètre dans le champ de l'optique. Cet objectif de microscope est associé à un détecteur différentiel constitué soit par une diode à deux cadrans, soit par deux diodes 6 sur lesquelles la lumière est renvoyée par l'intermédiaire de deux prismes 7. L'axe optique du référentiel fixe constitué par l'objectif 5 et le détecteur différentiel 6–7 constitue l'axe Y selon le trièdre de référence ci-dessus défini.

L'appareil de positionnement comporte également des moyens 8 de support et de déplacement d'un boitier 9 à l'intérieur duquel est fixée la pastille du laser, ainsi que des moyens 10 de support et de déplacement de la fibre optique 11. La pastille de laser ne se déplace avec son support que selon l'axe Z, jusqu'à être positionnée à l'origine par rapport au référentiel fixe. Le déplacement de la pastille de laser est obtenu par un mouvement rapide au début, puis affiné par un mouvement lent, ces deux mouvements étant créés par une table sur roulements, et par un moteur actionnant une vis sans fin, schématisé par une flèche M.

De son côté la fibre optique se déplace selon les trois axes Z, X et Y du trièdre de référence, et ce déplacement est de même façon obtenu d'abord rapidement selon Z au moyen d'une table sur roulements et ensuite par un ensemble de deux appareils appelés scanners puisqu'ils permettent de balayer l'espace XY avec une amplitude de l'ordre du millimètre.

Le premier scanner 12 est couplé à une came 13 qui est excentrée. Par conséquent, lorsque le scanner 12 entre en mouvement, la came 13 agit sur le support d'un second scanner 14, lequel supporte l'extrémité de la fibre optique au moyen d'une pipette 15, par laquelle la fibre est aspirée. L'action du premier scanner 12 se traduit donc au niveau de l'extrémité de la fibre optique par un balayage ou par un déplacement en Y, l'action du second scanner 14 se traduit au niveau de la fibre optique par un balayage en X.

Enfin, l'appareil de positionnement comporte une diode détectrice 16, qui est couplée avec l'extrémité libre de la fibre optique: c'est cette diode qui permettra de repérer le positionnement de la fibre optique par rapport au faisceau lumineux émis par le laser.

L'appareil comporte également un premier moyen de collage 17, qui se présente sous la forme d'une seringue déplacée par un vérin identifié V4 et par une table roulements. Cette seringue 17 permet de fixer par une goutte de colle l'extrémité de la fibre optique sur la céramique qui supporte la pastille de laser, lorsque la fibre et le laser sont correctement alignés. L'appareil comporte également un deuxième moyen de collage sous forme d'une deuxième seringue 18, mobile par l'intermédiaire d'un vérin V5 et par une table sur roulements. Cette seconde seringue permet de fixer par un point de colle la gaine de la fibre optique sur un passage à travers la paroi du boitier 9.

La figure 3 représente une vue simplifiée en plan des deux dispositifs qui supportent la fibre optique et le boitier dans lequel est fixé le laser.

A l'intérieur d'un boitier d'encapsulation 9, de type DIL, la pastille 19 du laser est fixée sur une embase de céramique ou d'oxyde de béryllium 20. Le boitier 9 comporte un passage 21, qui est un morceau de tube, fixé à travers la paroi verticale du boitier 9 sur le petit côté de ce boitier qui est opposé à la pastille du laser. Le boitier, qui à ce moment là ne comporte pas encore de couvercle, est positionné sur un support 22, muni de deux machoires 23 et 24. Ces machoires sont elles-mêmes munies de contacts à ressorts 25, qui viennent prendre appui sur les connexions extérieures du boitier 9 lorsque les deux machoire 23 et 24 se referment pour immobiliser le boitier 9. Le support 22 est déplacé par un moteur M1, et les deux machoires sont actionées par deux vérins symbolisés par V1 et V2.

En alignement avec le boitier 9 du laser se trouve un support 10 sur lequel la fibre optique 11 est immobilisée. L'une des extrémités de cette fibre, c'est-à-dire celle qui n'est pas alignée avec le laser 19, est bloquée en face d'une diode détectrice 16. L'autre extrémité, qui est à aligner avec le laser 19, est maintenue en place par un pion 26, qui en position normale est solidaire de la plaque 10, mais amovible. Un moteur M2 entrainant une table sur roulement 27, munie d'un bras 28, permet de manipuler le pion 26, et par son intermédiaire de faire avancer ou reculer la fibre optique selon l'axe Z. Une encoche 29 pratiquée dans le support 10 de la fibre optique correspond à l'encombrement du boitier 9, et lui servira de support lorsque à la fin de l'opération la fibre optique sera collée sur le boitier. Enfin des moyens de déplacements tels que moteurs électriques M2 ou vérins V3 permettent de déplacer la fibre optique 11 sur son support, de façon rapide, le déplacement précis étant assuré par les scanners 12 et 14 dans les axes Y et X respectivement et par le moteur M2 dans l'axe Z.

Les moyens de déplacements précis qui sont mis en oeuvre dans cet appareil sont des galvanomètres de puissance, et étant donné que l'élongation des déplacements requis selon les trois axes ne dépasse pas un millimètre, il suffit que ces galvanomètres oscillent autour de leur position d'équilibre pour que la came 13, qui est excentrée, ou la pipette 15, qui est supportée par l'une de ses extrémités, soit déplacée de l'ordre de 500 microns, ce qui est suffisant pour assurer le balayage de positionnement. Toutefois les scanners peuvent être remplacés par des moteurs pas à pas à condition que le nombre de pas soit suffisant pour assurer une bonne précision du positionnement, meilleur que le micron, ou à condition que la mécanique associée permette de garantir cette fiabilité dans le positionnement à mieux qu'un micron.

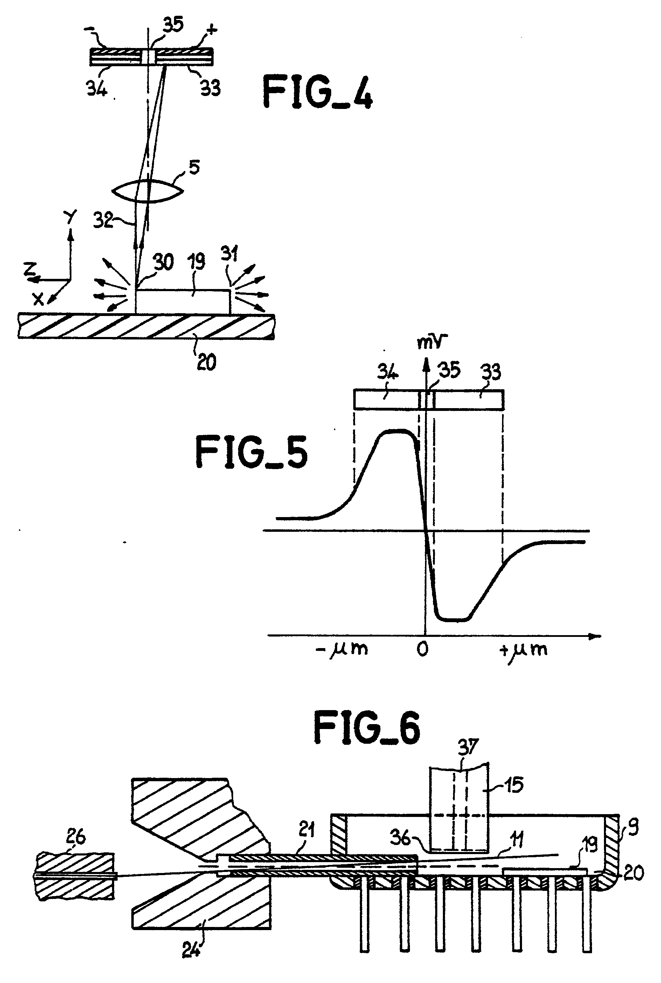

Cette description sommaire de l'appareil qui vient d'être faite va permettre maintenant de mieux comprendre comment est réalisé l'alignement réciproque de la fibre optique et d'un laser. L'étape de base de ce positionnement est représenté en figure 4.

Il a été dit que la première chose à faire est de repérer les positions réciproques du laser et de la fibre optique par rapport à un référentiel fixe, puis de positionner tour à tour le laser et la fibre optique, toujours par rapport à ce référentiel fixe. Le laser 19 est dans le présent cas de montage un laser à ruban qui émet de l'énergie lumineuse par deux faces opposées 30 et 31. Pour identifier et repérer la face avant 30 du laser on utilise la part d'énergie lumineuse spontanée du laser émise ou réfléchie dans une direction perpendiculaire à la direction de son faisceau principal, c'est-à-dire dans la direction Y de la convention qui a été adoptée pour le repérage en figure 1. Ce rayonnement lumineux 32 est capté par l'objectif de microscope 5 et projeté sur une diode écartométrique 6 + 7 telle que représentée en figure 2 ou à deux cadrans 33 et 34 telle que représentée sur cette figure 4. Cette diode écartométrique comporte en son centre une région neutre 35. C'est l'axe déterminé par l'axe optique de l'objectif de microscope 5 et la région neutre 35 de la diode écartométrique qui constitue le référentiel fixe par rapport auquel vont être positionnés les composants de la tête optique.

Dans le cas de figure représentée en figure 4, le laser est trop avancé par rapport à ce référentiel fixe, et le rayonnement lumineux 32 est projeté sur la diode 33. En déplaçant le laser, c'est-à-dire en le reculant selon l'axe Z, le rayonnement 32 va passer par la région neutre 35, puis être projeté sur la diode 34.

Ainsi le support du boitier laser est entrainé selon l'axe d'émission Z, par un moteur pas à pas et une vis sans fin. Lorsque le laser entre dans le champ de l'optique 5, l'image infra-rouge du laser formée sur le détecteur génère un signal électrique qui s'annule lorsque le point d'émission avant du laser, c'est-à-dire la lumière parasite émise par la face 30, est centrée par rapport au détecteur, dans la zone neutre 35. C'est ce qui est représenté sur la figure 5, étant entendu qu'on conviendra de considérer comme négatives les distances, en micron, pour lesquelles la face avant 30 du laser n'a pas atteint l'origine du référentiel fixe, et comme positives les distances correspondant à une position dans laquelle le laser à dépassé ce référentiel, tel que représenté sur la figure 4. C'est donc lorsque le signal délivré par le détecteur différentiel 33+34 s'annule que le laser est correctement positionné.

Le grandissement du système optique d'imagerie, c'est-à-dire de l'objectif de microscope à grande focale, doit être choisi pour avoir une dynamique de recherche suffisante pour que la lumière émise par la face arrière 31 du laser ne pénètre pas dans le champ de l'optique 5. Avec un grandissement de l'ordre de 20, la dynamique de recherche est suffisante et elle est typiquement de l'orde de 300 à 500 microns.

La figure 6 représente une vue en coupe partielle du boitier de tête optique, montrant l'introduction de la fibre dans le boitier et sa manipulation par rapport au laser.

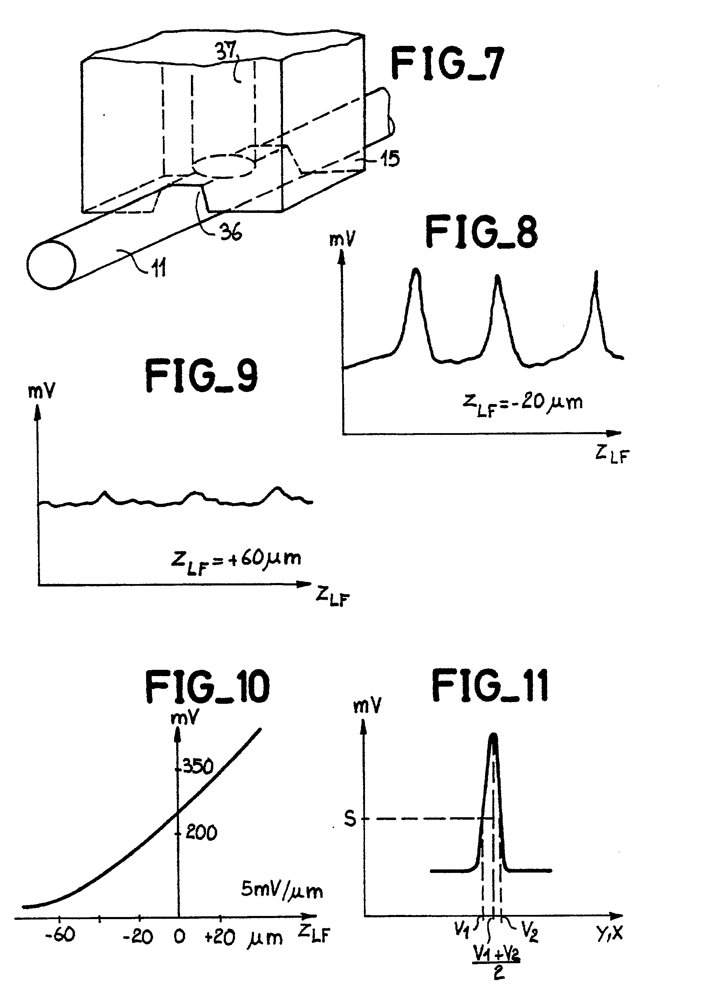

Le laser 19, fixé sur son embase de céramique 20 dans son boitier 9, étant correctement positionné par rapport au référentiel fixe, l'extrémité de la fibre optique 11, maintenue et manipulée par la pince 26, est introduit dans le tube 21 qui traverse la paroi du boitier 9, de façon à venir "survoler" la puce du laser 19. L'introduction de la fibre 11 dans le tube 21 est facilitée par l'intermédiaire des deux machoires 23 et 24 décrites en figure 3, celles-ci ayant une extrémité qui présente un cône d'ouverture assez grand pour que l'introduction de la fibre 11 dans ce cône ne pose aucun problème. Dans un premier temps la pince 26 est positionnée trop basse par rapport à l'axe Z d'émission du laser, de telle sorte que, comme cela est représenté sur la figure 6, la fibre optique 11, par son extrémité libre proche du laser, se trouve plus haute que le laser et le survole. Ceci est important pour éviter que, lors de l'introduction de la fibre 11 dans le boitier 9, l'extrémité de la fibre ne vienne heurter le bord du substrat céramique 20. L'extrémité de la fibre 11 est alors prise par une pipette 15, dont le schéma est agrandi en figure 7. Cette pipette comporte une rainure 36 qui permet d'épouser sensiblement la forme de la fibre optique 11, et elle est percée longitudinalement par un canal 37 relié à une pompe à vide. L'aspiration de la fibre 11 par la rainure 36 est suffisante pour manipuler la fibre vis à vis du laser 19.

L'extrémité de la fibre 11 est à ce moment très en retrait par rapport à la position du laser, de l'ordre de un millimètre. Par ailleurs elle est maintenue par la pipette 15 au-dessus de la face supérieure du laser à une distance Y d'environ 100 à 200 microns : elle "survole" le laser.

La fibre est alors animée d'un mouvement de va et vient latéral selon l'axe X, d'une amplitude de l'ordre de 400 mcirons, et on l'avance progressivement vers le laser, dans un mouvement axial rapide, créé par le moteur M2 et la pince 26. Lorsque la fibre survole le laser elle module la lumière infra-rouge du laser sur le détecteur de position 6 en figure 2 ou 33-34 en figure 4, au moment de son passage au-dessus du point d'émission du laser.

La fibre est alors reculée lentement, par un mouvement axial lent le long de l'axe Z, et l'amplitude du signal de modulation s'annule lorsque l'extrémité de la fibre 11 se trouve légèrement en retrait par rapport à la face d'entrée du laser, d'une quantité connue et constante. C'est ce qui est représenté en figure 8 et 9, qui donnent la modulation du signal électrique sur le détecteur différentiel en fonction de la distance de la fibre optique à la face émissive du laser, lorsque la fibre survole le laser en figure 8, et lorsque la fibre est correctement éloignée de la face émissive en figure 9. Si on convient d'appeler $Z_{LF}$ la distance entre le laser et la fibre selon l'axe Z, et que l'on considère que Z augmente lorsque le laser se rapproche de la fibre, la figure 8 montre que si par exemple $Z_{LF}$=-20 microns, la fibre survole le laser et elle module la lumière émise par la face 30 du laser, dans le mouvement de va et vient latéral selon l'axe des X qui lui est communiqué par la pipette 15. Par contre la figure 9 correspond au cas ou la fibre étant reculée, la distance $Z_{LF}$ = +60 microns signifie que la fibre est à 60 microns de la face avant du laser et la modulation cesse, ou n'est plus que très peu marquée par réflexion sur l'extrémité sphérique de la fibre. On peut également, au lieu de détecter l'annulation de l'amplitude de la modulation sur le détecteur différentiel, détecter la position pour laquelle cette amplitude franchit un certain seuil, et choisir comme valeur de seuil celle correspondant par exemple à $Z_{LF}$ = 0 micron. C'est ce qui est représenté en figure 10 : à partir du moment ou le seuil est atteint, il suffit de reculer dans un mouvement lent selon l'axe Z la fibre optique d'une distance pré-déterminée, par exemple 60 microns pour être sûr qu'elle est correctement positionnée selon l'axe Z par rapport au laser.

La fibre optique 11 étant correctement positionnée en Z par rapport au laser 19, il faut alors la positionner en X et Y pour obtenir le maximum de couplage.

La dynamique de déplacement de la fibre dans le plan X-Y, perpendiculaire à la direction Z d'émission du laser, est relativement faible de l'ordre de 500 microns. Par contre la sensibilité doit être inférieure au micron et le temps raisonnable pour obtenir le couplage est de l'ordre de quelques secondes.

Pour déplacer le fibre dans le plan X-Y, on utilise les scanners 12 et 14. A partir d'une position trop haute de la fibre 11, le scanner 12, qui commande la position en Y, descend la fibre d'un pas, pendant que le scanner 14, qui commande la vibration selon l'axe des X, et qui porte la pipette 15, fait balayer la fibre 11 devant le laser 19. La descente selon l'axe Y se poursuit jusqu'à ce que la lumière émise par le laser soit captée par la fibre optique et détectée par la diode de contrôle 16.

Le couplage en X-Y est donc obtenu par les mouvements combinés des scanners 12 et 14, pilotés par un microprocesseur, au moyen des informations obtenues à partir du signal de lumière couplée mesuré à l'autre extrémité de la fibre par la diode 16. Le couplage optimum, aussi bien en Y qu'en X, peut être obtenu par comparaison avec une valeur de seuil. C'est ce qui est représenté en figure 11 qui donne la forme du signal électrique détecté par la diode réceptrice 16, en fonction de la position de la fibre optique dans un plan transversal par rapport à l'axe d'émission du laser. Les positions en Y ou en X étant portées en abscisse, et la tension délivrée par la diode 16 portée en ordonnée, le signal se présente sous forme d'une courbe en cloche, et la position optimale peut être obtenue par mesure de la position correspondant à un seuil. Si V1 et V2 sont les deux positions de la fibre, dans son mouvement de déplacement en face du laser, correspondant au seuil S prédéterminé, la position de couplage est (V1 + V2)/2, et l'électronique associée à l'appareil de positionnement permet de forcer l'un et/ou l'autre scanner 12 et 14 dans la position (V1 +V2)/2.

Une fois le couplage obtenu en X-Y, celui-ci peut être optimisé par un léger déplacement selon l'axe Z, dans un intervalle de l'ordre de 10 microns, pour affiner la position optimale en Z qui avait été précédemment déterminée de façon arbitraire en reculant l'extrémité de la fibre 11 de 60 microns par rapport à la face avant 30 du laser.

La fibre étant désormais positionnée en Z, en Y, et en X par rapport au faisceau lumineux du laser, elle est dans un premier temps collée sur la céramique 20 qui supporte le laser au moyen d'une goutte de colle, distribuée par la seringue 17 qui est rapprochée de la fibre par le vérin V4. Cette goutte de colle est polymérisée par un flash de rayonnement ultra-violet.

La fibre à proprement parler étant fixée sur la céramique 20, la gaine plastique de la fibre est à son tour fixée dans le tube 21 qui traverse la paroi du boitier 9 au moyen d'une autre goutte de colle, délivrée par l'autre seringue 18, positionnée par le vérin V5, pouvant être également réticulée par un flash de rayonnement ultra-violet.

A partir de ce moment le support 10 qui maintient la fibre optique 11 peut être retiré de l'appareil, le boitier 9 de tête optique étant maintenu par la position 29 qui est prévue à cet effet dans le support 10. Pour achever une tête optique il suffit de poser et de sceller un couvercle sur le boitier 9.

L'appareil de positionnement de la fibre optique par rapport à un laser a été décrit de façon relativement sommaire. Il comporte bien entendu des dispositifs d'acquisition de données, relatives à la position des organes en mouvement ainsi que des dispositifs de sécurité, et l'ensemble de toutes ces données sont traitées de façon automatique par un microprocesseur qui permet de commander les déplacements rapides, les déplacements lents, et d'obtenir en un temps de l'ordre d'une minute un positionnement avec une précision meilleure que 0,5 microns.

En résumé, le procédé comporte donc les étapes suivantes:

– pré-positionnement: mise en place de la plaque 10 support de fibre optique 11 et du boitier 9 support du laser 19, connexion électrique du laser, et avance rapide du boitier du laser, à proximité du référentiel fixe 5-6-7,

– mise en place de la fibre dans le boitier, par avance lente du boitier de laser et entrée de la fibre dans le tube 21, jusqu'à ce que l'extrémité de la fibre arrive à proximité de la céramique 20 qui porte le laser, descente de la pince 26 et avance du boitier de laser jusqu'à ce que l'extrémité de la fibre arrive à proximité du laser, et saisie de la fibre par aspiration par la pipette 15,

– positionnement en Z du laser: avance du laser et positionnement du laser dans le champ du premier cadran du détecteur différentiel, à plus ou moins 200 microns, puis avance lente du laser jusqu'à ce que le signal du détecteur différentiel change de signe: la position de centrage du laser par rapport au référentiel fixe est atteinte,

– positionnement en Z de la fibre : avance rapide de la fibre, et mise en vibration du scanner 14 en X, puis avance lente de la fibre jusqu'à apparition sur le détecteur différentiel d'une modulation du signal électrique. Recul de la fibre en Z, d'une valeur connue.

– positionnement en X et en Y de la fibre optique : mouvement horizontal en X, communiqué à la fibre par la pipette 15 et le scanner 14, simultanément avec une descente en pas à pas selon l'axe Y communiqué par le scanner 12 et l'excentrique 13, jusqu'à ce que la position optimale en X et en Y soit atteinte, cette position optimale étant décelée par la diode détectrice 16

– optimisation du couplage par balayage en X en Y et en Z de la fibre précédemment précentrée

– immobilisation de la fibre 11 par collage de la fibre elle-même sur la céramique 20 qui supporte le laser 19 et par collage de la gaine de la fibre dans le tube 21 qui traverse le boitier 9 du laser

– déchargement de la tête optique réalisée et fermeture du boitier au moyen d'un couvercle.

L'ensemble de ces positionnements est réalisé sous le contrôle d'un système électronique basé sur un microprocesseur qui acquiert les données de positionnement et commande les moteurs de déplacements.

L'appareil et le procédé de positionnement sont appliqués à la réalisation rapide et économique de têtes optiques fibrées, pour le traitement des informations en électronique professionnelle et en télécommunications. Ils sont précisés par les revendications suivantes.

**Revendications**

1. Procédé de positionnement réciproque de l'extrêmité d'une fibre optique et d'un laser semiconducteur, la pastille du laser (19) étant montée dans un boitier (9) sans couvercle, et la fibre (11) sensiblement parallèle à l'axe (Z) émissif du laser (19) étant introduite dans le boitier à travers l'une de ses parois, ce procédé étant caractérisé en ce que le laser (19) et la fibre (11) sont repérés par rapport à un référentiel fixe dont un axe est l'axe optique (Y) commun à un dispositif optique d'imagerie (5) et à un détecteur optique différentiel (6, 7) qui capte l'énergie rayonnée par le laser (19) dans une direction perpendiculaire (Y) à l'axe d'émission (Z) du laser.

2. Procédé de positionnement selon la revendication 1, caractérisé en ce que, une première face émissive (30) du laser (19) étant positionnée à l'origine du référentiel fixe (5, 6, 7), l'extrémité de la fibre (11) introduite dans le boitier (9) est détectée par l'atténuation de l'énergie captée par le détecteur différentiel (6, 7) lorsque la fibre (11) est située entre le laser (19) et le détecteur différentiel (6, 7), la fibre (21) étant alors éloignée du laser (19), selon l'axe émissif (Z) d'une quantité connue jusqu'à cessation d'atténuation, puis la fibre étant positionnée dans un plan transversal (X, Y) par rapport à l'axe émissif (Z) au moyen de balayages selon les deux axes (Y, X) dans ce plan transversal, la fibre (11) et le laser (19) étant alignés lorsque le maximum de lumière émise par le laser (19) et transmise par la fibre optique est détecté par une diode détectrice (16), située à la seconde extrémité de la fibre optique (11).

3. Appareil de positionnement réciproque d'une fibre optique et d'un laser semiconducteur mettant en œuvre le procédé de la revendication 2, caractérisé en ce qu'il comporte:
— des moyens formant référentiel fixe, lesdits moyens étant constitués par un dispositif d'imagerie optique (5) et un détecteur optique différentiel (6, 7), fixés sur un bâti rigide,
— des moyens mobiles de support (22) et de maintien (23, 24) d'un boitier (9) ouvert, dans lequel est fixé le laser (19),
— des moyens de déplacements (M1) rapide et lent du laser (19) dans son boitier, selon l'axe (Z) émissif du laser pour positionner la face émissive (30) du laser à l'origine du référentiel fixe,
— des moyens mobiles de support (10) et de maintien (26) d'une fibre optique (11),
— des moyens de déplacements (M2) rapide et lent de la fibre (11), selon l'axe (Z) émissif du laser, pour introduire la fibre dans le boitier (9) et la positionner entre le laser (19) et le détecteur différentiel (6, 7),
— deux moyens de déplacements fins, (12+13, 14+15) par mouvement de va et vient, de la fibre (11) dans un plan (X, Y) transversal par rapport à l'axe émissif (Z) du laser,
— des moyens de détection optique (16) de la lumière émise par le laser (19) et transmise par la fibre (11),
— des moyens mobiles (17,18) d'immobilisation de la fibre (11) par rapport au boitier du laser (19),
— des moyens électroniques d'acquisition des données de positions de la fibre (11) et du laser (19) et de commande des moyens de déplacements (M1, M2, 12, 14) et de collage (17, 18).

4. Appareil de positionnement selon la revendication 3, caractérisé en ce que le dispositif optique d'imagerie (5) est un objectif de microscope de grandissement tel qu'il ne voit qu'une seule face émissive (30) du laser (19), dite face avant, la face émissive arrière (31) étant hors du champ de l'objectif (5).

5. Appareil de positionnement selon la revendication 3, caractérisé en ce que les moyens de maintien du boitier (9) du laser sont deux machoires (23, 24) actionnées par des vérins (V1, V2).

6. Appareil de positionnement selon la revendication 3, caractérisé en ce que les moyens de déplacements fins de la fibre (11) dans un plan transversal (X, Y) à l'axe (Z) émissif du laser (19) sont constitués par deux scanners (12, 14), le premier scanner (12), associé à une came (13) déplaçant le second scanner (14) selon un premier axe (Y) du plan transversal, le second scanner (14), associé à un bras (15) manipulant la fibre (11) selon un second axe (X) du plan transversal.

7. Appareil de positionnement selon la revendication 3, caractérisé en ce que le bras de déplacement (15) de la fibre (11) est une pipette, munie d'une canalisation (37) reliée à une pompe aspirante, la fibre (11) étant aspirée et maintenue dans une rainure (36) en bout de la pipette.

8. Appareil de positionnement selon la revendication 3, caractérisé en ce que les moyens d'immobilisation de la fibre (11) par rapport au boitier (9) du laser sont constitués par deux seringues (17, 18) délivrant une microgoutte de colle sur la fibre (11) à proximité du laser (19) et une microgoutte de colle sur la gaine de la fibre, dans le passage (21) à travers la paroi du boitier (9), ainsi que par un dispositif d'irradiation aux ultra-violets de la colle déposée.

## Claims

1. A method for positioning the end of an optical fibre with respect to a semiconductor laser, the laser dice (19) being mounted in a housing (9) without lid, and the fibre (11), which is essentially parallel to the emissive axis (Z) of the laser (19) being introduced into the housing through one of its walls, this method being characterized in that the laser (19) and the fibre (11) are marked with respect to a stationary reference system one axis of which is the optical axis (Y) which is common to an optical image producing device (5) and to a differential optical detector (6, 7) which intercepts the energy radiated by the laser (19) in a direction (Y) perpendicular to the emission axis (Z) of the laser.

2. A method positioning according to claim 1, characterized in that, a first emissive surface (30) of the laser (19) being positioned at the origin of the stationary reference system (5, 6, 7), the end of the fibre (11) introduced into the housing (9) is detected by the attenuation of the energy intercepted by the differential detector (6, 7) when the fibre (11) is situated between the laser (19) and the differential detector (6, 7), the fibre (21) then being taken away from the laser (19), according to the emissive axis (Z) by a known quantity until the attenuation ceases, then the fibre being positioned in a plane (X, Y) which is transversal with respect to the emissive axis (Z) by means of scanning movements along the two axes (Y, X) in this transversal plane, the fibre (11) and the laser (19) being aligned when the maximum of light emitted by the laser (19) and transmitted through the optical fibre is detected by a detection diode (16) situated at the second end of the optical fibre (11).

3. An apparatus for positioning an optical fibre with respect to a semiconductor laser applying the method of claim 2, characterized in that it comprises:

- means defining a stationary reference system, said means being constituted by an optical image producing device (5) and a differential optical detector (6, 7) fixed on a rigid frame,
- mobile support (22) and hold means (23, 24) for supporting and holding an open housing (9) in which the laser (19) is fixed,
- means (M1) for rapidly and slowly displacing the laser (19) in its housing along the emissive axis (Z) of the laser for positioning the emissive surface (30) of the laser at the origin of the stationary reference system,
- mobile support (10) and hold means (26) for supporting and holding an optical fibre (11),
- means (M2) for rapidly and slowly displacing the fibre (11) along the emissive axis (Z) of the laser, in order to introduce the fibre into the housing (9) and to position it between the laser (19) and the differential detector (6, 7),
- two means for fine displacements (12+13, 14+15) by to-and-fro movement of the fibre (11) in a plane (X, Y) which is transversal with respect to the emissive axis (Z) of the laser,
- optical detection means (16) for detecting the light emitted by the laser (19) and transmitted by the fibre (11),
- mobile means (17, 18) for immobilising the fibre (11) with respect to the housing of the laser (19),
- electronic means for acquiring data concerning the positions of the fibre (11) and the laser (19) and for controlling the displacements (M1, M2, 12, 14) and gluing means (17, 18).

4. A positioning apparatus according to claim 3, characterized in that the optical image producing device (5) is a microscope lens having an enlargening capacity such that it only "sees" one emissive surface (30) of the laser (19), called front surface, whereas the rear emissive surface (31) is out of scope for the lens (5).

5. A positioning apparatus according to claim 3, characterized in that the means for holding the housing (9) of the laser are two jaws (23, 24) activated by jacks (V1, V2).

6. A positioning apparatus according to claim 3, characterized in that the means for fine displacements of the fibre (11) in a transversal plane (X, Y) to the emissive axis (Z) of the laser (19) are constituted by two scanners (12, 14), the first scanner (12) associated to a cam (13) displacing the second scanner (14) along a first axis (Y) of the transversal plane, while the second scanner (14) associated to an arm (15) manipulates the fibre (11) along a second axis (X) of the transversal plane.

7. A positioning apparatus according to claim 3, characterized in that the arm (15) for displacing the fibre (11) is a pipette supplied with a pipe (37) connected to a suction pump, the fibre (11) being sucked and held in a groove (36) at the end of the pipette.

8. A positioning apparatus according to claim 3, characterized in that the means for immobilizing the fibre (11) with respect to the laser housing (9) are constituted by two syringes (17, 18) delivering a microdroplet of glue onto the fibre (11) near the laser (19) and a microdroplet of glue onto the sheath of the fibre in the passage-way (21) through the wall of the housing (9), as well as by a device for irradiating the applied glue by UV light.

## Patentansprüche

1. Verfahren zum Positionieren des Endes einer Lichtleitfaser bezüglich eines Halbleiterlasers, wobei das Laserplättchen (19) in einem Gehäuse (9) ohne Deckel angeordnet ist und die im wesentlichen zur Emissionsachse (Z) des Lasers (19) parallele Faser (11) in das Gehäuse durch eine seiner Wände eindringt, dadurch gekennzeichnet, daß der Laser (19) und die Faser (11) in Bezug auf ein ortsfestes Bezugssystem markiert sind, von dem eine Achse die einer optischen Abbildungsvorrichtung (5) und einem optischen Differentialdetektor (6, 7) gemeinsame optische Achse (Y) ist, wobei dieser Detektor die vom Laser (19) in einer zur Emissionsachse (Z) des Lasers senkrechten Richtung (Y) ausgestrahlte Energie auffängt.

2. Positionierverfahren nach Anspruch 1, dadurch gekennzeichnet, daß eine erste Emissionsfläche (30) des Lasers (19) sich am Ursprung des ortsfesten Bezugssystems (5, 6, 7) befindet und das in das Gehäuse (9) eindringende Ende der Faser (11) durch die Dämpfung der vom Differentialdetektor (6, 7) aufgefangenen Energie entdeckt wird, wenn die Faser (11) sich zwischen dem Laser (19) und dem Differentialdetektor (6, 7) befindet, wobei die Faser (21) dann vom Laser (19) entlang der Emissionsachse (Z) um einen bekannten Betrag entfernt wird, bis die Dämpfung aufhört, und wobei dann die Faser in eine Querebene (X, Y) in Bezug auf die Emissionsachse (Z) mittels Abtasten entlang der beiden Achsen (Y, X) in dieser Querebene positioniert wird und die Faser (11) und der Laser dann fluchten, wenn das Maximum des vom Laser (19) ausgesandten und von der Lichtleitfaser übertragenen Lichts von einer Detektordiode (16) entdeckt wird, die sich am zweiten Ende der Lichtleitfaser (11) befindet.

3. Gerät zum Positionieren einer Lichtleitfaser bezüglich eines Halbleiterlasers, das das Verfahren gemäß Anspruch 2 verwendet, dadurch gekennzeichnet, daß es aufweist:
- Mittel, die ein ortsfestes Bezugssystem bilden, wobei diese Mittel aus einer optischen Abbildungsvorrichtung (5) und einem optischen Differentialdetektor (6, 7) bestehen, die auf einem starren Rahmen befestigt sind,
- bewegliche Träger- (22) und Haltemittel (23, 24) für ein offenes Gehäuse (9), in dem der Laser (19) befestigt ist,
- Mittel zur schnellen und langsamen Verschiebung (M1) des Lasers (19) in seinem Gehäuse entlang der Emissionsachse (Z) des Lasers, um die Emissionsseite (30) des Lasers im Ursprung des ortsfesten Bezugssystems zu positionieren,
- bewegliche Trage- (10) und Haltemittel (26) für eine Lichtleitfaser (11),
- Mittel (M2) zur schnellen und langsamen Verschiebung der Lichtleitfaser (11) entlang der Emissionsachse (Z) des Lasers, um die Faser in das Gehäuse (9) einzuführen und sie zwischen dem Laser (19) und dem Differentialdetektor (6, 7) anzuordnen,

- zwei Mittel (12+13, 14+15) zur Feinverschiebung der Faser (11) in Hin- und Herbewegung in einer zur Emissionsachse (Z) des Lasers senkrechten Ebene (X, Y),

- Mittel zum optischen Erfassen (16) des vom Laser (19) ausgesandten und von der Faser (11) übertragenen Lichts,

- bewegliche Mittel (17, 18) zur Festlegung der Faser (11) in Bezug auf das Gehäuse des Lasers (19),

- elektronische Mittel zur Erfassung der Daten der Positionen der Faser (11) und des Lasers (19) und zur Steuerung der Bewegungsmittel (M1, M2, 12, 14) und der Klebemittel (17, 18).

4. Positioniergerät nach Anspruch 3, dadurch gekennzeichnet, daß die optische Abbildungsvorrichtung (5) ein Objektiv eines Mikroskops mit einer solchen Vergrößerung ist, daß es nur eine Emissionsseite (30) des Lasers (19) sieht, genannt Vorderseite, während die Rückseite (31) außerhalb des Blickfelds des Objektivs (5) liegt.

5. Positioniergerät nach Anspruch 3, dadurch gekennzeichnet, daß die Mittel zum Halten des Gehäuses (9) des Lasers zwei Backen (23, 24) sind, die von Zylinder- und Kolbenmitteln (V1, V2) betätigt werden.

6. Positioniergerät nach Anspruch 3, dadurch gekennzeichnet, daß die Mittel zur Feinverschiebung der Faser (11) in einer zur Emissionsachse (Z) des Lasers (19) senkrechten Ebene (X, Y) aus zwei Scannern (12, 14) bestehen, wobei der erste Scanner (12), der einer Nockenwelle (13) zugeordnet ist, den zweiten Scanner (14) entlang einer ersten Achse (Y) der Querebene bewegt, während der zweite Scanner (14), der einem Arm (15) zugeordnet ist, die Faser (11) entlang einer zweiten Achse (X) der Querebene bewegt.

7. Positioniergerät nach Anspruch 3, dadurch gekennzeichnet, daß der Arm (15) zur Verschiebung (15) der Faser (11) eine Pipette ist, die mit einer Leitung (37) versehen ist, welche mit einer Saugpumpe verbunden ist, wobei die Faser (11) angesaugt und in einer Nut (36) am Ende der Pipette gehalten wird.

8. Positioniergerät nach Anspruch 3, dadurch gekennzeichnet, daß die Mittel zur Festlegung der Faser (11) in Bezug auf das Gehäuse (9) des Lasers aus zwei Spritzen (17, 18), die einen Mikrotropfen Kleber auf die Faser (11) in der Nähe des Lasers (19) und einen Mikrotropfen Kleber auf die Hülle der Faser im Durchgang (21) durch die Wand des Gehäuses (9) geben, sowie aus einer Vorrichtung zur UV-Bestrahlung des aufgebrachten Klebers bestehen.

# FIG_1

# FIG_2

# FIG_3

FIG_4

FIG_5

FIG_6

FIG_7

37

15

36

11

FIG_8

mV

$z_{LF} = -20 \mu m$

$Z_{LF}$

FIG_9

mV

$z_{LF} = +60 \mu m$

$Z_{LF}$

FIG_10

mV

350

200

5mV/$\mu$m

-60    -20    0    +20    $\mu$m    $Z_{LF}$

FIG_11

mV

S

$V_1$    $V_2$    Y,X

$\dfrac{V_1 + V_2}{2}$